# EUROPÄISCHE PATENTSCHRIFT

(11) **EP 1 999 047 B1**
(45) Veröffentlichungstag und Bekanntmachung des Hinweises auf die Patenterteilung: **28.04.2010**
(21) Anmeldenummer: 07711436.1
(22) Anmeldetag: 02.02.2007
(51) Int. Cl.: B65G 47/52, B65G 47/68, B65G 47/69, B65G 47/91

(54) **VORRICHTUNG UND VERFAHREN ZUM UMSETZEN SCHEIBENFÖRMIGER ELEMENTE**
APPARATUS AND METHOD FOR TRANSFERRING DISC-SHAPED ELEMENTS
DISPOSITIF ET PROCEDE DE RETOURNEMENT D'ELEMENT EN FORME DE DISQUE

(30) Priorität: 09.02.2006 DE 102006006045
(43) Veröffentlichungstag der Anmeldung: 10.12.2008
(73) Patentinhaber: AMB Apparate + Maschinenbau GmbH, 86462 Langweid (DE)
(72) Erfinder: BUHL, Mathias, 86368 Gersthofen (DE); BRAIN, Bernhard, 86368 Gersthofen (DE)
(74) Vertreter: Beder, Jens
(86) Internationale Anmeldenummer: PCT/EP2007/000921
(87) Internationale Veröffentlichungsnummer: WO 2007/090578

(56) Entgegenhaltungen:
- FR-A1- 2 435 417
- GB-A- 1 177 942

## Beschreibung

Die Erfindung betrifft eine Vorrichtung und ein Verfahren zum Umsetzen scheibenförmiger Elemente entsprechend den einleitenden Teilen der Ansprüche 1 und 11,15, wie sie aus der FR-A-2435417 bekannt sind.

Bei Produktionsprozessen ist es häufig erforderlich, das zu bearbeitende Element von einer zuführenden Transporteinrichtung auf eine andere Transporteinrichtung umzusetzen. Dies kann beispielsweise nach einer Anlieferung von Rohlingen sein, um diese einem weiteren Prozessschritt zuführen zu können. Auch während des Prozesses sind verschiedentlich Umsetzvorgänge erforderlich, beispielsweise um nach einem vollendeten Prozessschritt ein bearbeitetes Element zu wenden und anschließend der weiteren Bearbeitung wieder zuzuführen.

Aus der DE 10 2005 013545 A1 ist es beispielsweise für die Halbleiterfertigung bekannt, scheibenförmige Elemente wie Halbleiterwafer mittels Vakuumsaugvorrichtungen von einem zuführenden Förderelement abzuheben und auf einem anderen, weiterführenden Förderelement wieder abzusetzen. Der Transport von der ersten, zuführenden Fördereinrichtung zu der zweiten, weiterführenden Fördereinrichtung erfolgt dabei durch translatorisches Bewegen des Vakuumsaugelements und damit des durch das Saugelement angehobenen scheibenförmigen Elements. Zudem ist es bekannt, vor dem Aufnehmen eines scheibenförmigen Elements durch das Vakuumsaugelement eine Wendevorrichtung vorzusehen. Nach dem Wenden durch diese Wendevorrichtung wird dann der Wafer durch ein Vakuumsaugelement abgehoben und zu der nächsten Fördereinrichtung transportiert. Die Vakuumsaugelemente sind dabei so orientiert, dass die Aufnahme der scheibenförmigen Elemente durch Anheben der scheibenförmigen Elemente entgegen der Schwerkraft erfolgt. Die Förderelemente zum Zuführen und zum Abtransport der Wafer sind auf einer gemeinsamen Trägerplatte angeordnet. Die translatorische Bewegung der scheibenförmigen Elemente erfolgt durch Verschieben der Saugelemente, welche an Führungsschienen befestigt sind.

Die beschriebene Vorgehensweise hat den Nachteil, dass durch die Vakuumsaugelemente eine erhebliche Saugkraft aufgebracht werden muss, um das sichere Anhaften der scheibenförmigen Elemente an dem Vakuumsaugelement zu ermöglichen. Um im Hinblick auf die Produktionskosten akzeptable Taktzeiten zu erhalten, muss eine relativ hohe Geschwindigkeit bei der translatorischen Bewegung erreicht werden. Gleichzeitig muss jedoch eine Störung des Produktionsbetriebs durch herabfallende Elemente sicher vermieden werden. Dies führt zu der hohen erforderlichen Saugkraft, um ein seitliches Abgleiten während der Beschleunigung bzw. dem Abbremsen des Saugelements während der translatorischen Bewegung zu verhindern. Insbesondere verhindert das einzelne Transportierten der Wafer durch ein einzelnes Saugelement einen hohen Durchsatz der Umsetzvorrichtung.

Es ist die Aufgabe der Erfindung, eine Vorrichtung sowie ein Verfahren zum Umsetzen scheibenförmiger Elemente zu schaffen, bei dem die Transportwege durch die Saugelemente möglichst gering gehalten werden können.

Die Aufgabe wird durch die erfindungsgemäße Vorrichtung mit den Merkmalen des Anspruchs 1 sowie das erfindungsgemäße Verfahren mit den Merkmalen des Anspruchs 11 bzw. 15 gelöst.

Die erfindungsgemäße Vorrichtung zum Umsetzen der scheibenförmigen Elemente von einer ersten Fördervorrichtung auf eine zweite Fördervorrichtung weist ein um eine Längsachse drehbares Trägerelement auf. An diesem Trägerelement ist zumindest eine Transportvorrichtung und zumindest ein Saugelement angeordnet. Die Transportvorrichtung und das zumindest eine Saugelement sind dabei bezüglich des drehbaren Trägerelements identisch orientiert und der Abstand zwischen einer Anlagefläche des zumindest einen Saugelements und der Auflageebene der Transportvorrichtung ist so veränderbar, dass die Differenz zwischen dem Abstand der Auflagefläche von dem Trägerelement und dem Abstand der Anlageebene von dem Trägerelement sowohl positive als auch negative Werte annehmen kann. Zum Abheben von Elementen ist es mit dieser Anordnung möglich, zunächst entgegen der Schwerkraft von der ersten Fördervorrichtung zumindest ein scheibenförmiges Element abzuheben, indem es durch das Saugelement in Richtung auf das drehbare Trägerelement und auf die Transportvorrichtung zu angehoben wird. Das drehbare Trägerelement wird hierzu über der ersten Fördervorrichtung positioniert. Das durch das zumindest eine Saugelement nun gehaltene scheibenförmige Element wird durch eine Drehung des drehbaren Trägerelements soweit gedreht, dass es sich nun oberhalb der Transportvorrichtung bzw. der Auflageebene der Transportvorrichtung befindet. Der relative Abstand zwischen der Anlagefläche des Saugelements, an der das scheibenförmige Element gehalten wird, und der Auflageebene der Transportvorrichtung wird beim Anheben des Elements vorzugsweise so verändert, dass das scheibenförmige Element bereits vor der Drehung leicht gegen die Auflageebene der Transportvorrichtung gezogen wird. Der weitere Transport, also die translatorische Bewegung von der ersten Fördervorrichtung zu der zweiten Fördervorrichtung erfolgt dann durch die Transportvorrichtung, auf der das scheibenförmige Element aufgrund der Schwerkraft aufliegt.

Umgekehrt kann das zumindest eine Element durch die erste Fördervorrichtung an die Transportvorrichtung übergeben werden. Das zumindest eine auf der Transportvorrichtung liegende Element wird dann durch das zumindest eine Saugelement in Anlage an der Transportvorrichtung gehalten. Anschließend wird die Transportvorrichtung gemeinsam mit dem zumindest einen Saugelement gedreht. Das zumindest eine Element wird dann durch das Saugelement von der Transportvorrichtung abgehoben und auf der zweiten Fördervorrichtung abgelegt.

In den Unteransprüchen sind vorteilhafte Weiterbildungen der erfindungsgemäßen Vorrichtung und des erfindungsgemäßen Verfahrens ausgeführt.

Insbesondere ist es vorteilhaft, wenn der Abstand zwischen einer Anlagefläche des zumindest einen Saugelements und dem Trägerelement veränderbar ist. Damit ist es möglich, durch höhenverstellbare Saugelemente sowohl das Abheben bzw. Ablegen der scheibenförmigen Elemente von der Zuführungsvorrichtung als auch das Anlegen an einer Auflageebene der Transportvorrichtung durchzuführen. Die Transportvorrichtung kann in diesem Fall besonders einfach ausgeführt werden und mit einem festen Abstand von der Drehachse bzw. dem Trägerelement an der Vorrichtung angeordnet sein.

In Abhängigkeit von der Anwendung kann es jedoch auch vorteilhaft sein, wenn der Abstand der Auflageebene der zumindest einen Transportvorrichtung von dem Trägerelement veränderbar ist, z.B. wenn durch die Saugelemente lediglich eine geringe Hubbewegung möglich ist. In diesem Fall erfolgt das Ablegen der scheibenförmigen Elemente auf der Transportvorrichtung durch Vergrößern des Abstands der Auflageebene der Transportvorrichtung von dem drehbaren Trägerelement bei konstantem Abstand der Anlagefläche von dem drehbaren Trägerelement. Damit ist eine Hubbewegung des einen Saugelements lediglich zum Unterstützen beim Abheben der scheibenförmigen Elemente von der ersten Fördervorrichtung bzw. beim Ablegen auf der zweiten Fördervorrichtung erforderlich und es können Saugelemente mit einem begrenzten Hub eingesetzt werden. Reicht die Saugkraft der Saugelemente alleine bereits zum Abheben der scheibenförmigen Elemente aus, so können auch starr montierte Saugelemente eingesetzt werden.

Insbesondere ist es bevorzugt, mehrere Saugelemente zu einer Gruppe von Saugelementen zusammenzufassen. Diese Gruppe von Saugelementen weist eine identische Orientierung auf wie die zumindest eine Transportvorrichtung, die an dem drehbaren Trägerelement angeordnet ist. Mit einer solchen Gruppe von Saugelementen können mehrere scheibenförmige Elemente angehoben und in einer gemeinsamen Drehbewegung über die Transportvorrichtung gebracht werden. Anschließend werden durch Verringern des Abstands wie bei einem einzelnen Saugelement die mehreren scheibenförmigen Elemente vorzugsweise gleichzeitig auf der Transportvorrichtung abgelegt. Beim Ablegen können zunächst mehrere scheibenförmige Elemente der Transportvorrichtung seriell zugeführt werden. Diese mehreren Elemente werden dann durch die Saugelemente in Anlage an der Transportvorrichtung gehalten und nach einer Drehbewegung durch die Saugelemente gleichzeitig oder einzeln oder in Gruppen nacheinander auf der zweiten Fördervorrichtung abgelegt.

Besonders bevorzugt ist es, mehrere Gruppen von Saugelementen und mehrere Transportvorrichtungen an dem Trägerelement anzuordnen, wobei jeweils eine Gruppe von Saugelementen und eine Transportvorrichtung eine identische Orientierung aufweisen. Auf diese Weise können an einem einzigen drehbaren Trägerelement beispielsweise vier Transportvorrichtungen und vier Gruppen von Saugelementen angeordnet sein. Die Transportvorrichtungen und die entsprechenden Gruppen von Saugelementen sind dann z.B. an vier Seiten des drehbaren Trägerelements angeordnet. Nach jeweils einer Vierteldrehung des Trägerelements können dann bereits wieder neue scheibenförmige Elemente durch die Saugelemente der benachbarten Gruppe aufgenommen werden. Die Drehbewegung wird hierzu getaktet durchgeführt.

Weiterhin ist es bevorzugt, dass die Saugelemente einer Gruppe einzeln ansteuerbar sind. Die individuelle Ansteuerbarkeit kann die Erzeugung der Saugkraft oder eine Hubbewegung zur Änderung des Abstands zwischen der Auflagefläche und der Anlagefläche oder beides betreffen. Durch so eine individuelle Ansteuerbarkeit der Saugelemente ist es einfach möglich, auch nicht ausgerichtete scheibenförmige Elemente zuverlässig von der Zuführungsvorrichtung abzuheben, wenn die scheibenförmigen Elemente zeitlich versetzt zueinander in den Einflussbereich der Saugelemente der Gruppe gelangen. Das Ausrichten der scheibenförmigen Elemente hinsichtlich ihres Abstands von den Saugelementen der Gruppe kann somit entfallen.

Die zumindest eine Transportvorrichtung ist vorzugsweise als Schnurtrieb ausgebildet. Damit kann das zumindest eine Saugelement zwischen den zumindest zwei Schnüren des Schnurtriebs angeordnet sein, so dass das Saugelement zwischen den beiden Schnüren des Schnurtriebs hindurchtreten kann. Dies erleichtert die Änderung des relativen Abstands zwischen der Anlagefläche des Saugelements und der Auflagefläche der Transportvorrichtung.

Weiterhin ist es vorteilhaft, wenn die Förderrichtung derjenigen Fördervorrichtung, die vorzugsweise mehrere scheibenförmige Elemente parallel transportiert, und die Transportrichtung der zumindest einen Transportvorrichtung näherungsweise senkrecht aufeinander stehen. Damit können mehrere, durch die Fördervorrichtung nebeneinander transportierte scheibenförmige Elemente gleichzeitig oder näherungsweise gleichzeitig in einen Übernahmebereich der erfindungsgemäßen Vorrichtung gebracht werden bzw. nach der Ablage abtransportiert werden. Im Falle der Zuführung können dann die parallel zugeführten scheibenförmigen Elemente gleichzeitig oder geringfügig zeitlich zueinander versetzt, durch die Saugelemente einer Gruppe angehoben werden und in einer gemeinsamen Drehbewegung über der Transportvorrichtung des drehbaren Trägerelements angeordnet werden. Während auf der ersten Fördervorrichtung parallel mehrere scheibenförmige Elemente angeliefert werden, erfolgt der Abtransport dagegen durch die Transportvorrichtung an dem drehbaren Trägerelement seriell. Umgekehrt werden im Falle einer seriellen Zuführung von Elementen diese nach der Ablage parallel durch die zweite Fördervorrichtung abtransportiert.

Gemäß einer weiteren Ausführungsform ist es bevorzugt, dass das Trägerelement zumindest in einer Richtung um die Längsachse endlos drehbar ist. Eine solche Ausbildung des drehbaren Trägerelements hat insbesondere den Vorteil, dass mehrere Gruppen von Saugelementen und Transportvorrichtungen effizient betrieben werden können. Das unendliche Drehen in einer Richtung verhindert dabei insbesondere auch das Auftreten hoher Beschleunigungskräfte auf die gehaltenen scheibenförmigen Elemente, wie sie bei einer Umkehrung einer Drehbewegung auftreten würden.

In der Zeichnung ist eine bevorzugte Vorrichtung sowie ein bevorzugtes Verfahren zur Umsetzung der scheibenförmigen Elemente von einer ersten Fördervorrichtung auf eine zweite Fördervorrichtung vereinfacht dargestellt. Die erfindungsgemäße Vorrichtung und das erfindungsgemäße Verfahren werden in der nachfolgenden Beschreibung näher erläutert. Es zeigen:
- Fig. 1: eine schematische Darstellung einer erfindungsgemäßen Vorrichtung in einer Draufsicht;
- Fig. 2: eine vereinfachte Darstellung eines Drehbalkens der erfindungsgemäßen Vorrichtung zu einem ersten Zeitpunkt des erfindungsgemäßen Verfahrens;
- Fig. 3: eine vereinfachte Darstellung des Drehbalkens der erfindungsgemäßen Vorrichtung zu einem zweiten Zeitpunkt des erfindungsgemäßen Verfahrens; und
- Fig. 4: eine schematische Darstellung zur individuellen Ausrichtung von scheibenförmigen Elementen beim Umsetzen.

In dem nachfolgenden Ausführungsbeispiel wird von einer parallelen Zuführung mehrerer scheibenförmiger Elemente über eine erste Fördervorrichtung ausgegangen. Die Fördervorrichtung wird daher als Zuführungsvorrichtung bezeichnet. Der serielle Abtransport wird durch eine als weiterführende Transportvorrichtung bezeichnete zweite Fördervorrichtung bewirkt.

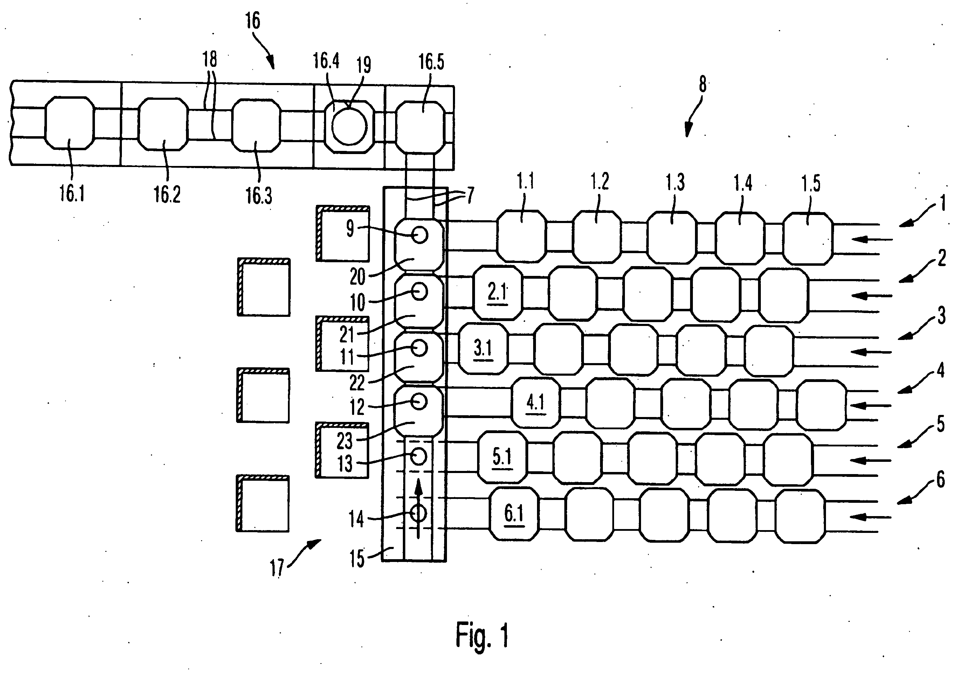

In der Fig. 1 ist ein Beispiel für eine erfindungsgemäße Vorrichtung in einer Draufsicht dargestellt. Dabei sind mehrere Förderelemente 1 bis 6 dargestellt, auf denen eine Anzahl von scheibenförmigen Elementen transportiert wird. Scheibenförmige Elemente im Sinne der Erfindung sind insbesondere Halbleiterwafer, aber auch andere näherungsweise ebene Elemente deren Längen- und Breitenausdehnung groß gegenüber ihrer Dicke ist, wie beispielsweise Leiterplatten.

Die Förderelemente 1 bis 6 sind als Schnurtriebe ausgebildet und bilden gemeinsam eine Zuführungsvorrichtung 8. Die Zuführungsvorrichtung 8 transportiert auf jedem der Förderelemente 1 bis 6 liegende scheibenförmige Elemente in Richtung auf einen Drehbalken 17 zu. Die scheibenförmigen Elemente können z.B. aus einer Fertigungsanlage zugeführt werden, nachdem ein Prozessschritt abgeschlossen ist. Mit Hilfe des Drehbalkens 17 werden die auf den Förderelementen 1 bis 6 angeordneten scheibenförmigen Elemente umgesetzt, d.h. von der Zuführungsvorrichtung 8 aufgenommen und auf einer weiterführenden Transporteinrichtung 16 abgelegt, um sie anschließend durch die weiterführende Transporteinrichtung 16 beispielsweise einem nachfolgenden Prozessschritt zuführen zu können.

Zur Erläuterung der erfindungsgemäßen Vorrichtung wird bei dem Ausführungsbeispiel der Fig. 1 angenommen, dass die Zuführungsvorrichtung 8 eine Mehrzahl von Fördereinrichtungen 1 bis 6 umfasst. Ferner wird angenommen, dass nach dem Umsetzen ein Weitertransport der scheibenförmigen Elemente durch die weiterführende Transporteinrichtung 16 erfolgt. Ebenso ist es jedoch auch möglich, dass die Zuführungseinrichtung 8 mittels eines sog. Carriers, der beispielsweise durch lediglich ein einzelnes Förderelement 1' bewegt wird, die scheibenförmigen Elemente in Richtung auf den Drehbalken 17 hin transportiert. In diesem Fall vereinfacht sich die Übernahme und das Umsetzen der scheibenförmigen Elemente, da die scheibenförmigen Elemente in einem Carrier an fest vorgegebene Positionen angeordnet sind. Anstelle des Umsetzens auf eine weiterführende Transporteinrichtung 16 ist es auch möglich, mit Hilfe der Transportvorrichtung 7 des Drehbalkens 17 die scheibenförmigen Elemente in einer Kassette oder einem anderen Behälter zu stapeln bzw. individuell abzulegen.

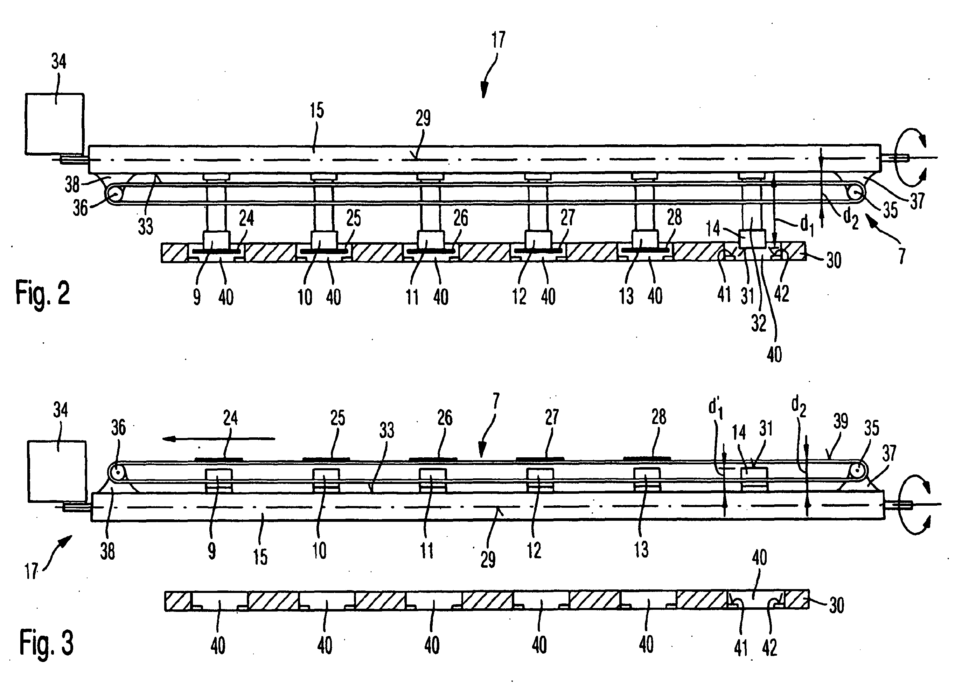

Der Drehbalken 17 umfasst ein drehbares Trägerelement 15, an dem die Transportvorrichtung 7 angeordnet ist. In dem dargestellten Ausführungsbeispiel ist die Transportvorrichtung 7 ein aus zwei parallel zueinander angeordneten Schnüren ausgebildeter Schnurtrieb. In dem Zwischenraum zwischen den beiden parallel zueinander angeordneten Schnüren sind mehrere Saugelemente 9 - 14 angeordnet. Die Saugelemente 9 - 14 sind an derselben Seite des drehbaren Trägerelements 15 des Drehbalkens 17 angeordnet und bezüglich ihres Abstands zu dem drehbaren Trägerelement 15 veränderbar. Dies wird nachfolgend unter Bezugnahme auf die Fig. 2 und 3 noch ausführlich erläutert. Die durch den Pfeil in der Fig. 1 angegebene Transportrichtung der Transportvorrichtung 7 steht vorzugsweise senkrecht auf der ebenfalls mit Hilfe von Pfeilen angegebenen Transportrichtung der Zuführungsvorrichtung 8. Damit können auf den parallel angeordneten Förderelementen 1 bis 6 der Zuführungsvorrichtung 8 liegende scheibenförmige Elemente gleichzeitig oder zeitlich versetzt durch die Saugelemente 9 bis 14 von den Förderelementen 1 bis 6 abgehoben werden. Die Saugelemente 9 bis 14 bilden eine Gruppe von Saugelementen.

Die Saugelemente 9 bis 14 sind wie auch die Transportvorrichtung 7 an dem drehbaren Trägerelement 15 angeordnet, wobei das drehbare Trägerelement 15 so orientiert werden kann, dass mittels der Saugelemente 9 bis 14 scheibenförmige Elemente von den Förderelementen 1 bis 6 abgehoben werden können. In dem dargestellten Ausführungsbeispiel ist es gezeigt, dass auf dem ersten Förderelement 1 (wie auch auf den übrigen Förderelementen 2 bis 6) insgesamt 5 Förderelemente 1.1 bis 1.5 nacheinander angeordnet sind. Die scheibenförmigen Elemente 1.1 bis 1.5 des ersten Förderelements 1 liegen aufgrund der Schwerkraft auf den Schnüren des Schnurtriebs des ersten Förderelements 1 auf. Bei gleichzeitigem Fördern sämtlicher scheibenförmiger Elemente auf den Förderelementen 1 - 6 werden die in Transportrichtung der Zuführungsvorrichtung 8 jeweils ersten scheibenförmigen Elemente 1.1, 2.1, 3.1 ... 6.1 nacheinander bis in einen Übernahmebereich gefördert. Als Übernahmebereich wird derjenige Bereich bezeichnet, in dem ein Abheben der scheibenförmigen Elemente von den Förderelementen 1 bis 6 der Zuführungsvorrichtung 8 möglich ist. Der Drehbalken 17 ist oberhalb der Zuführungsvorrichtung 8 angeordnet, so dass die ersten scheibenförmigen Elemente 1.1, ..., 6.1 durch die entsprechenden Förderelemente 1 bis 6 bis unter die Saugelemente 9 bis 14 transportiert werden können. Die Zuführung der scheibenförmigen Elemente durch die Zuführungsvorrichtung 8 kann sowohl getaktet als auch kontinuierlich erfolgen.

Zum Abheben der scheibenförmigen Elemente 1.1 bis 6.1 werden die Saugelemente 9 bis 14 in Richtung auf die Förderelemente 1 bis 6 und damit die jeweils ersten scheibenförmigen Elemente 1.1 bis 6.1 abgesenkt. Befindet sich ein scheibenförmiges Element 1.1,...,1.6 unter dem entsprechenden Förderelement 1 bis 6 zugeordneten Saugelement 9 bis 14, so wird das jeweilige Saugelement 1 bis 6 angesteuert und das scheibenförmige Element 1.1 bis 6.1 abgehoben. Das Abheben erfolgt entgegen der Schwerkraft und hebt das scheibenförmige Element 1.1 - 6.1 in Richtung auf das drehbare Trägerelement 15 zu an. Hierzu wird eine Hubbewegung der Saugelemente 9 bis 14 bei der Ansteuerung erzeugt, die einen Abstand einer Anlagefläche des Saugelements von dem Trägerelement 15 verändert. Ein durch die erzeugte Saugkraft von der Zuführungsvorrichtung 8 abgehobenes scheibenförmiges Element wird durch die Saugkraft in Anlage an der Anlagefläche oder Greiffläche des Saugelements 9 bis 14 gehalten.

Wie es in der Fig. 1 gezeigt ist, können die scheibenförmigen Elemente auf den Förderelementen 1 - 6 auch mit unregelmäßigen Abständen angeordnet sein und daher zeitlich versetzt zueinander in den Obernahmebereich gelangen. Um durch die Gruppe von Saugelementen 9, ...,14 mehrere scheibenförmige Elemente 1.1 bis 6.1 anheben zu können, kann entweder vor dem Übernahmebereich eine Vorrichtung zum Ausrichten der Position der jeweils ersten scheibenförmigen Elemente 1.1,... 6.1 vorgesehen sein oder aber die Saugelemente 9 bis 14 sind individuell ansteuerbar. Für die weiteren Erläuterungen sei angenommen, dass die Saugelemente 9 - 14 individuell ansteuerbar sind. Die individuelle Ansteuerung der Saugelemente 9 bis 14 kann die Erzeugung der Saugkraft, die Hubbewegung zum Anheben der scheibeförmigen Elemente oder beides umfassen.

In der Fig. 1 ist es dargestellt, dass auf der Transportvorrichtung 7 des Drehbalkens 17 bereits vier scheibenförmige Elemente 20 - 23 angeordnet sind, welche in Richtung auf die weiterführende Transporteinrichtung 16 abgefördert werden. Das Abtransportieren erfolgt mit Hilfe der Transportvorrichtung 7, die die scheibenförmigen Elemente 20 bis 23 in Richtung auf die weiterführende Transporteinrichtung 16 hin bewegt. Dort werden die scheibenförmigen Elemente 20 - 23 nacheinander übernommen, so dass nun die Transportvorrichtung 7, die an dem drehbaren Trägerelement 15 befestigt ist, leer ist. Nachdem auf diese Weise die Transportvorrichtung 7 leer gefahren wurde, wird das drehbare Trägerelement 15 so gedreht, dass die Saugelemente 9 bis 14 den Förderelementen 1 bis 6 gegenüberliegen. Bei einer unsynchronisierten Zuführung der scheibenförmigen Elemente 1.1 bis 6.1 wird jeweils durch die Position eines scheibenförmigen Elements 1.1 bis 6.1 das Ansteuern der Saugelemente 9 bis 14 getriggert. In dem dargestellten Ausführungsbeispiel bedeutet dies, dass das zunächst in den Übernahmebereich gelangende scheibenförmige Element 3.1 des dritten Förderelements 3 bei identischer Transportgeschwindigkeit der Förderelemente 1 bis 6 zunächst unter dem mit 11 bezeichneten Saugelement angekommen ist. Sobald eine bestimmte Position unterhalb dieses korrespondierenden Saugelements 11 erreicht ist, wird das Saugelement 11 angesteuert und damit das scheibenförmige Element 3.1 [MaB1] von dem dritten Förderelement 3 entgegen der Schwerkraft und auf das drehbare Trägerelement 15 zu abgehoben.

Die Positionserfassung muss räumlich nicht mit der Stelle des tatsächlichen Anhebens der Elemente zusammenfallen. Die Triggerung kann daher auch zeitlich versetzt zu der Erfassung einer bestimmten Position erfolgen, die auf dem Zuführweg vor dem Übernahmebereich liegt, an dem das Element angehoben wird. Für eine konstante Fördergeschwindigkeit ist ein einfacher zeitlicher Versatz ausreichend. Variiert dagegen die Geschwindigkeit, mit der die Elemente von der Positionserfassung zu dem Übernahmebereich transportiert werden, so muss der zeitliche Versatz aus den Fördergeschwindigkeiten und der zurückzulegenden Wegstrecke bis zum Anhebepunkt berechnet werden.

Für die Beschreibung der Vorrichtung und des Verfahrens wird angenommen, dass die Zuführungsvorrichtung 8 in einer horizontalen Ebene angeordnet ist. Die Begriffe "oberhalb", "über", "unterhalb" und "unter" beziehen sich auf eine durch die Schwerkraft vorgegebene Richtung.

Während die übrigen ersten schreibenförmigen Elemente 1.1 bis 6.1 der Förderelemente 1 bis 6 auf diese Weise nacheinander durch die entsprechenden noch freien Saugelemente 9, 10 und 12. bis 14 angehoben werden, wird das zuerst von dem dritten Förderelement 3 abgehobene scheibenförmige Element 3.1 durch das mit 11 bezeichnete Saugelement über dem dritten Förderelement 3 gehalten und gegen die Transportvorrichtung 7 gezogen. Die zwischen der Transportvorrichtung 7 und dem scheibenförmigen Element 3.2 erzeugte Reibungskraft verhindert ein seitliches Abrutschen des Elements 3.1 bei der nachfolgenden Drehbewegung. Das Anlegen der Elemente an der Transportvorrichtung 7 kann auch für alle bestückten Saugelemente 9 bis 14 vor der Drehung des Drehbalkens 15 gleichzeitig erfolgen.

Sind sämtliche Saugelemente 9 bis 14 der Gruppe von Saugelementen, die an dem drehbaren Trägerelement 15 angeordnet sind, mit jeweils einem scheibenförmigen Element bestückt, so wird das drehbare Trägerelement 15 um seine Längsachse gedreht. Bei dem dargestellten ersten Ausführungsbeispiel, das eine einfache Version des Drehbalkens 17 zeigt, erfolgt eine Drehung des drehbaren Trägerelements 15 um 180°.

Die Längsachse, um die eine Drehbewegung erfolgt, muss dabei nicht innerhalb des drehbaren Trägerelements 15 verlaufen. Um eine möglichst geringe Bewegung der durch die Saugelemente 9 bis 14 gehaltenen Halbleiterwafer zu erhalten, kann die Längsachse beispielsweise auch durch die Ebene der gehaltenen scheibenförmigen Elemente verlaufen.

Durch die Drehung um 180° sind nunmehr die scheibenförmigen Elemente, die durch die Saugelemente 9 bis 14 an der Transportvorrichtung 7 anliegend gehalten werden, oberhalb der Transportvorrichtung 7 angeordnet. Die Saugelemente 9 bis 14 und damit die dort ausgebildeten Anlageflächen sind hinsichtlich ihres Abstandes von dem drehbaren Trägerelement 15 veränderbar. Durch Verringern des Abstandes der Saugelemente 9 - 14 in Richtung auf das drehbare Trägerelement 15 zu, werden die gehaltenen scheibenförmigen Elemente an der Transportvorrichtung 17 anliegend gehalten und nach der Drehung des Drehbalkens 15 durch Verringern der Saugkraft in einer durch den Schnurtrieb definierten Auflageebene abgelegt.

Die Saugelemente 9 bis 14 werden nach dem Ablegen der scheibenförmigen Elemente auf der Transportvorrichtung 7 soweit in Richtung auf das drehbare Trägerelement 15 zu bewegt, dass eine Beeinflussung des Abtransports der scheibenförmigen Elemente nicht zu befürchten ist. Vorzugsweise werden die Saugelemente 9 bis 14 abgeschaltet, so dass der weitere Transport der scheibenförmigen Elemente nunmehr wiederum allein unter der Einwirkung der Schwerkraft erfolgt. Wie es bereits für die scheibenförmigen Elemente 20 bis 23 erläutert wurde, erfolgt nunmehr der Abtransport der scheibenförmigen Elemente durch die Transportvorrichtung 7. Die Transportvorrichtung 7 kann insbesondere auch getaktet betrieben werden.

In der Fig. 1 ist es dargestellt, dass bereits fünf scheibenförmige Elemente 16.1 bis 16.5 auf der weiterführenden Transporteinrichtung 16 abgelegt wurden. Die weiterführende Transporteinrichtung 16 besteht ebenfalls aus einem Schnurtrieb mit zwei Schnüren 18 und transportiert die dort abgelegten scheibenförmigen Elemente seriell weiter. Im Bereich der weiteren Transporteinrichtung 16 kann insbesondere vorteilhaft eine Vorrichtung zur Positionskorrektur 19 angeordnet sein.

Die Saugelemente 9 bis 14 sind vorzugsweise als Bernoulli-Sauger ausgebildet. Bernoulli-Sauger haben den Vorteil, dass ein besonders schonendes Anheben der scheibenförmigen Elemente von der Zuführungsvorrichtung möglich ist. Ferner ist im Gegensatz zu Vakuumsaugern die Kontaktfläche zwischen dem Saugelement und dem Wafer verringert, wodurch eine mögliche Verschmutzung reduziert wird. Bernoulli-Saugelemente werden außerdem mit Druckluft betrieben. Ein Ansaugen von Schmutzpartikeln in das System der Saugelemente kann damit ebenfalls nicht auftreten. Während die Drehbewegung des Drehbalkens 17 relativ langsam erfolgt, wenn die Saugelemente 9 bis 14 mit scheibenförmigen Elementen bestückt sind, kann nach dem Abtransport der scheibenförmigen Elemente durch die Transportvorrichtung 7 der Drehbalken 17 mit einer erheblich höheren Drehgeschwindigkeit in entgegengesetzter Richtung gedreht werden. Die Drehrichtung des Drehbalkens 17 kann so gewählt werden, dass die Bewegungsrichtung der Saugelemente 9 bis 14 mit der Transportrichtung der Förderelemente 1 - 6 während des Abhebens der scheibenförmigen Elemente von den Förderelementen 1 bis 6 übereinstimmt. Insbesondere kann die Drehrichtung des Drehbalkens 17 auch konstant sein. Eine Drehbewegung in Vorwärts- und Rückwärtsrichtung hat den Vorteil, dass eine Durchführung elektrischer Leitungen durch Schleifkontakte nicht erforderlich ist. Das langsame Drehen des drehbaren Trägerelements 15 bei besetzten Saugelementen 9 bis 14 hat den Vorteil, dass eine Lageänderung der scheibenförmigen Elemente bezüglich der Saugelemente 9 bis 13 vermieden wird. Dementsprechend ist die Ablage auf der Transportvorrichtung 7 präziser.

Vorzugsweise werden die scheibenförmigen Elemente mit Hilfe der Saugelemente 9 bis 14 soweit angehoben, dass die scheibenförmigen Elemente bereits während der Drehbewegung in Anlage mit den Schnüren der Transportvorrichtung 7 sind. Eine seitliche Bewegung der scheibenförmigen Elemente wird dann durch die Reibung an den Schnüren der Transportvorrichtung 7 verhindert. Alternativ wird während der nahezu vertikalen Orientierung bei der Drehbewegung ein Verrutschen der scheibenförmigen Elemente verhindert, indem an den Saugelementen 9 bis 14 Anlageelemente mit erhöhtem Reibungskoeffizient vorgesehen sind, an denen die Elemente anliegen. Die Anlagefläche wird dann durch die Anlageelemente definiert.

Bevor eine Drehbewegung des drehbaren Trägerelements 15 nach dem Abheben der Halbleiterwafer von der Zuführungsvorrichtung 8 begonnen werden kann, ist es erforderlich, die scheibenförmigen Elemente so weit von den Förderelementen 1 bis 6 abzuheben, dass ein Kontakt mit den Förderelementen 1 bis 6 bei der Drehung ausgeschlossen ist. Die Drehbewegung wird vorzugsweise begonnen, nachdem die Saugelemente 9 bis 14 in ihre Endposition angehoben worden sind. In dieser Endposition liegen die Elemente an dem Schnurtrieb der Transportvorrichtung 7 an. Das Erreichen der Endposition wird beispielsweise durch Endlagenschalter an den einzelnen Saugelementen 9 bis 14 bzw. deren Hubvorrichtungen festegestellt. Diese Hubbewegung kann entweder wie oben beschrieben durch ein Reduzieren des Abstands Saugelemente 9 bis 14 von dem drehbaren Trägerelement 15 erfolgen, wenn der Drehbalken 17 bezüglich seiner Position über der Zuführungsvorrichtung 8 fest angeordnet ist, oder aber durch ein Anheben des gesamten Drehbalkens 17 bewirkt werden. In diesem Fall wird lediglich ein geringfügiges Anheben der scheibenförmigen Elemente von den Förderelementen 1 bis 6 durch die Saugelemente 9 bis 14 durchgeführt.

Sind alle Saugelemente 9 bis 14 mit jeweils einem scheibenförmigen Element bestückt, so wird in diesem Fall das drehbare Trägerelement 15 insgesamt abgehoben und dann der Abstand zwischen den durch die Saugelemente 9 bis 14 gehaltenen scheibenförmigen Elementen von den Förderelementen 1 bis 6 vergrößert. Ist ein Kontakt nicht mehr möglich, so wird das Trägerelement 15 in bereits beschriebener Weise gedreht und die gehaltenen scheibenförmigen Elemente werden auf der Transportvorrichtung abgelegt. Dies kann beispielsweise auch durch ein Vergrößern des Abstands der Auflagefläche von dem Trägerelement 15 erfolgen.

Bei dem dargestellten Ausführungsbeispiel der Fig. 1 ist es vorteilhaft, wenn im Bereich der Zuführungsvorrichtung 8 durch Beschleunigung der nacheinander auf jeweils einem Förderelement 1 bis 6 angeordneten scheibenförmigen Elementen der Abstand zwischen aufeinanderfolgenden scheibenförmigen Elementen eines Förderelements 1 bis 6 vergrößert wird. Dies kann durch in einer Linie nacheinander angeordnete Förderelementabschnitte erreicht werden, die mit unterschiedlichen Transportgeschwindigkeiten betrieben werden. Durch das Schaffen einer solchen vergrößerten Lücke wird das zur Verfügung stehende Zeitfenster zum Abheben eines scheibenförmigen Elements von dem jeweiligen Förderelement 1 bis 6 vergrößert und eine Kollision der scheibenförmigen Elemente verhindert. Eine solche Kollision kann bei den spröden Halbleiterwafern bereits zu Beschädigungen führen. Ferner kann im Bereich der Zuführungsvorrichtung 8 eine Synchronisationseinrichtung angeordnet sein. Mit Hilfe der Synchronisationseinrichtung können die jeweils ersten scheibenförmigen Elemente 1.1 bis 6.1 von dem Eintritt in den Übernahmebereich ausgerichtet werden. Das Ausrichten ist erforderlich, da die ersten scheibenförmigen Elemente 1.1 bis 6.1 bei nichtsynchronisierten Förderelementen 1 bis 6 zeitlich nacheinander in den Übernahmebereich unterhalb des Drehbalkens 17 eintreffen können, wenn die Saugelemente 9 bis 14 nicht individuell ansteuerbar sind.. Dabei wird es insbesondere bevorzugt, dass das Eintreffen eines ersten scheibenförmigen Elements sensorisch erfasst wird und eine Zeitsteuerung ausgelöst, die eine zulässige Zeit bis zum Abtransport der ausgerichteten scheibenförmigen Elemente festlegt.

Die Zuführungsvorrichtung 8 kann auch noch eine Sensorik zum Detektieren von beschädigten Wafern aufweisen, die dann automatisch aus der Anlage entfernt werden. Das Aussortieren kann z.B. durch einen Weitertransport des beschädigten Wafers durch das entsprechende Förderelement 1 bis 6 der Zuführungsvorrichtung 7 erfolgen. Zum Aussortieren wird dann lediglich das Abheben des Elements von dem Förderelement 1 bis 6 unterdrückt. Am Ende des Förderelements 1 bis 6 rutscht das aussortierte Element dann beispielsweise in eine Sammelvorrichtung.

Durch eine vom ersten einlaufenden Wafer initiierte Zeitsteuerung wird sichergestellt, dass bei einem durch Ausmusterung fehlenden Element auch mit einem oder mehreren nicht bestückten Saugelementen 9 bis 14 eine Drehung und ein Abtransport der Elemente erfolgt. Die Zeitsteuerung legt den spätesten Zeitpunkt für den Beginn der Drehung fest, um sicherzustellen, dass rechtzeitig für die weiteren zugeführten Elemente der Zuführungsvorrichtung 8 der Drehbalken wieder positioniert ist.

In der Fig. 2 ist ein Drehbalken 17 einer erfindungsgemäßen Vorrichtung zu einem Zeitpunkt in einer Seitenansicht dargestellt, zu dem mehrere scheibenförmige Elemente 24 bis 28 eine Position unterhalb des Drehbalkens 17 in dem Ubernahmebereich erreicht haben. In dem dargestellten Ausführungsbeispiel werden die scheibenförmigen Elemente nicht wie in der Fig. 1 durch Förderelemente 1 bis 6 transportiert. Vielmehr sind die scheibenförmigen Elemente 24 bis 28 in einem sog. Carrier 30 angeordnet. In einem solchen Carrier 30 sind mehrere Ausnehmungen 40 in einer Matrix vorgesehen. In diesen Ausnehmungen 40 sind die scheibenförmigen Elemente 24 bis 28 angeordnet. In den Ausnehmungen 40 sind Halteelemente vorgesehen, die ein Herausfallen der scheibenförmigen Elemente 24 bis 28 verhindern. Diese Halteelemente sind in dem dargestellten Ausführungsbeispiel als Auflagen 41, 42 im Randbereich der Ausnehmungen 40 des Carriers 30 ausgebildet. Dies ist in der Fig. 2 beispielhaft nur für die rechte Ausnehmung 40 mit Bezugszeichen angegeben.

In dem dargestellten Ausführungsbeispiel der Fig. 2 werden fünf scheibenförmige Elemente 24 - 28 gleichzeitig durch die korrespondierenden Saugelemente 9 bis 13 aufgenommen. Die scheibenförmigen Elemente 24 bis 28 sind dabei in einer Position gezeigt, in der sie sich nach dem Abheben von den Halteelementen des Carriers 30 befinden. Bei dem in der Figur 2 rechts dargestellten Saugelement 14 ist eine Anlagefläche 31 des Saugelements 14 schematisch dargestellt. Die Anlagefläche 31 kann, wie es bereits erläutert wurde, auch durch Teilflächen von Anlageelementen gebildet werden. Die Saugelemente 9 bis 14 sind identisch aufgebaut. Um unnötige Wiederholungen zu vermeiden wird daher nur das Saugelement 14 samt seiner Fixierung an dem Trägerelement 15 im Einzelnen beschrieben.

Die Position des Saugelements 14 relativ zu dem drehbaren Trägerelement 15 und damit der Abstand d₁ zwischen dem drehbaren Trägerelement 15 und der Anlagefläche 31 ist durch eine z.B. als Pneumatikzylinder ausgebildete Hubvorrichtung 32 veränderbar. Das Saugelement 14 ist über die Hubvorrichtung 32 mit dem drehbaren Trägerelement 15 verbunden und dort fixiert. Die Hubvorrichtung 32 ist in ihrer Länge einstellbar ausgeführt, so dass der Abstand d₁ der Anlagefläche 31 des Saugelements 14 von dem drehbaren Trägerelement 15 einstellbar ist. Das Saugelement 14 kann daher in Richtung auf den Carrier 30 zu abgesenkt werden. Dabei vergrößert sich ein Abstand d₁ zwischen der auf den Carrier 30 hin orientierten Seite 33 des drehbaren Trägerelements 15 und der Anlagefläche 31 des Saugelements 14. Zum Abheben eines scheibenförmigen Elements ist dabei der Abstand d₁ der Anlagefläche 31 von dem Trägerelement 15 größer als der Abstand d₂ der Auflagefläche von dem drehbaren Trägerelement (d₁-d₂>0).

Damit wird durch Vergrößern des Abstands d₁ zwischen der Anlagefläche 31 und dem drehbaren Trägerelement 15 die Anlagefläche 31 und das Saugelement 14 so in die Nähe der Oberfläche des scheibenförmigen Elements gebracht, dass das scheibenförmige Element von den Halteelementen des Carriers 30 abgehoben und in Anlage mit der Anlagefläche 31 des Saugelements 9 bis 14 gehalten wird. Der besseren Übersichtlichkeit wegen ist das scheibenförmige Element in der ganz rechten Ausnehmung 40 des Carriers 30 nicht dargestellt.

In der Figur 2 ist es zu erkennen, dass das Anheben der scheibenförmigen Elemente 24 bis 28 entgegen der schwerkraft aus dem Carrier 30 heraus in Richtung auf das drehbare Trägerelement 15 hin erfolgt. Der Abstand d₁ der Anlagefläche 31 von dem drehbaren Trägerelement 15 ist dabei größer als ein weiterer Abstand d₂ zwischen dem drehbaren Trägerelement 15 und einer Auflagefläche der Transportvorrichtung 7. Die Transportvorrichtung 7 ist in dem dargestellten Ausführungsbeispiel so angeordnet, dass die Auflageebene 29 in einem festen Abstand d₂ von dem drehbaren Trägerelement 15 angeordnet ist.

Die Transportvorrichtung 7 besteht aus dem bereits beschriebenen Schnurtrieb, welcher durch eine Antriebsrolle 35 angetrieben wird. Am entgegengesetzten Ende des Schnurtriebs ist eine Umlenkrolle 36 ausgebildet. Die Antriebsrolle 35 und die Umlenkrolle 36 sind über Halterungen 37, 38 an dem drehbaren Trägerelement 15 angeordnet. Weitere Führungsrollen können in Abhängigkeit von der Gesamtlänge des Schnurtriebs vorgesehen sein. Nachdem die scheibenförmigen Elemente 24 bis 28 sich jeweils in Anlage mit den Anlageflächen 31 der Saugelemente 9 bis 13 befinden, werden die Hubvorrichtungen 32 angesteuert und die Saugelemente 9 -14 in Richtung auf das drehbare Trägerelement 15 zu bewegt.

Dabei werden gleichzeitig die scheibenförmigen Elemente 24 bis 28 mindestens soweit über den Carrier 30 angehoben, dass sie bei einer Drehbewegung des Drehbalkens 17 nicht mit dem Carrier 30 kollidieren.

Wie es in der Fig. 2 dargestellt ist, erfolgt der weitere Transport nach dem Umsetzen der scheibenförmigen Elemente 24 bis 28 im Gegensatz zu dem Ausführungsbeispiel der Fig. 1 nicht über den Schnurtrieb 18 sondern die scheibenförmigen Elemente 24 bis 28 werden in einer Kassette 34 einzeln abgelegt. Die Kassette 34 ist hierzu hinsichtlich ihrer relativen Position zu dem Trägerelement 15 bzw. der Transportvorrichtung 7 veränderbar. Die weitere Transporteinrichtung wird in diesem Fall durch die Kassette 34 und einen die Kassette 34 bewegenden Antrieb gebildet.

Nachdem durch Ansteuern der Hubvorrichtungen 32 der Saugelemente 9 bis 14 ein ausreichender Abstand zwischen dem Carrier 30 und den scheibenförmigen Elementen 24 - 28 erreicht ist, wird der Drehbalken 17 um die Längsachse 29 gedreht. Um die Geschwindigkeit der gehaltenen scheibenförmigen Elemente 24 bis 28 gering zu halten, kann die Längsachse 29 bei lediglich einer Gruppe von Saugelementen 9 bis 14 vorzugsweise in der Nähe der Anlageflächen 31 der Saugelemente 9 bis 14 oder durch diese hindurch verlaufen.

Die scheibenförmigen Elemente 24 liegen an den Anlageflächen der Saugelemente 9 bis 14 bzw. an der Transportvorrichtung 7 an. In dem dargestellten Ausführungsbeispiel mit nur einer Gruppe von Saugelementen 9 bis 14 und einer Transportvorrichtung 7 erfolgt nun eine Drehung um 180° und die scheibenförmigen Elementen 24 bis 28 werden oberhalb der durch die Schnüre des Schnurtriebs definierten Auflageebene 39 angeordnet. Um die scheibenförmigen Elementen 24 bis 28 auf dem Schnurtrieb in der Auflageebene 39 der Transportvorrichtung 30 abzulegen, sofern dies nicht bereits vor der Drehung erfolgt ist, werden die Hubvorrichtungen 32 der Saugelemente 9 bis 14 so betätigt, dass die Saugelemente 9 bis 14 weiter in Richtung auf das Trägerelement 15 zu bewegt werden. Dabei wird der erste Abstand d₁ solange verringert, bis er kleiner ist als der weitere Abstand d₂ (d₁-d₂<0). Wenn die scheibenförmigen Elemente 24 bis 28 auf der Transportvorrichtung 7 abgelegt sind, werden sie in der in der Figur 3 dargestellten Richtung durch die Transportvorrichtung 7 abtransportiert, wie es in der Fig. 3 dargestellt ist. Am Ende der Transportvorrichtung 7 ist die Kassette 34 angeordnet, so dass die scheibenförmigen Elemente 24 bis 28 unmittelbar oder durch eine nicht dargestellte Ablagevorrichtung in die Kassette 34 eingeführt werden können.

Wie es aus der Darstellung der erfindungsgemäßen Vorrichtung zu den beiden Zeitpunkten der Fig. 2 und der Fig. 3 eindeutig zu entnehmen ist, wird zunächst durch Verringern des Abstands d₁ der Anlagefläche 31 von dem Trägerelement 15 das jeweils an dem Saugelement 9 bis 14 gehaltene scheibenförmige Element 24 bis 28 aus dem Carrier 30 oder von einem Förderelement 1 bis 6 abgehoben. Spätestens nach der Drehung des Trägerelements 15 an dem die Saugelemente 9 bis 14 und die Transportvorrichtung 7 identisch orientiert angeordnet sind, führt eine weitere Verringerung des Abstands d₁ zum Ablegen der scheibenförmigen Elemente auf der Transportvorrichtung 7.

Das Anheben der scheibenförmigen Elemente 24 bis 28 von den Förderelementen 1 bis 6 bzw. aus dem Carrier 30 kann dabei auch gleichzeitig mit einer bereits eingeleiteten Drehbewegung des Drehbalkens 17 erfolgen. Dabei ist lediglich sicherzustellen, dass die Hubbewegung durch die Hubvorrichtungen 32 ausreichend schnell ist, um einen Kontakt einer hinteren Kante der scheibenförmigen Elemente während der Drehbewegung zu verhindern.

Die Transportvorrichtung 7 kann entweder getaktet oder kontinuierlich betrieben werden. Ein Takten der Transportvorrichtung 7 ist dann vorteilhaft, wenn beispielsweise die scheibenförmigen Elemente 24 - 28 in die Kassette 34 eingeführt werden sollen. Dabei ist nach Ablegen jeweils eines scheibenförmigen Elements 24 bis 28 ein kurzer Transportstop der Transportvorrichtung 7 vorteilhaft, um eine Neupositionierung der Kassette 34 hinsichtlich ihrer Höhe bezüglich der Auflageebene 39 zu ermöglichen.

Um die zu bewegenden Massen des Drehbalkens 17 gering zu halten, ist es vorteilhaft, ein Druckluftsystem zum Erzeugen des erforderlichen Luftstroms für die Bernoulli-Sauger extern vorzusehen. Das Druckluftsystem muss dann nicht an dem Trägerelement 15 selbst angeordnet sein,' wodurch sich das Gewicht des Trägerelements 15 verringert. Die Antriebstechnik einschließlich eines Antriebsmotors für die Transportvorrichtung 7 ist vorzugsweise auf dem Trägerelement 15 angeordnet, so dass zum Anschließen und Betreiben Transportvorrichtung bzw. der gesamten Vorrichtung zum Umsetzen der scheibenförmigen Elemente im Falle der Anordnung der Pumpe auf dem Trägerelement 15 lediglich Stromleitungen und Signalleitungen zum Ansteuern beweglich mit dem Drehbalken verbunden sein müssen. Dies ist vor allem bei einem endlos drehbaren Drehbalken 17 vorteilhaft.

Bei dem dargestellten Ausführungsbeispiel wird davon ausgegangen, dass sowohl die Zuführung als auch der Weitertransport entweder durch die weitere Transporteinrichtung 16 oder aber durch die Kassette 34 jeweils in horizontaler Richtung erfolgt. Eine solche horizontale Ausrichtung der Anlage ist jedoch nicht erforderlich. Dementsprechend ist dann die Drehung bzw. die Positionierung des Drehbalkens 17 bezüglich der Zuführungsvorrichtung 8 und der weiteren Transporteinrichtung 16, 34 anzupassen. Dies führt auch zu einer Abweichung von einer 180°-Drehung nach dem Aufnehmen der scheibenförmigen Elemente 24 bis 28 durch die Saugelemente 9 bis 14.

In den Fig. 2 und 3 ist eine Seitenansicht eines einfachen Ausführungsbeispiels eines Drehbalkens 17 dargestellt. Die Anordnung, bei der an einer Seite 33 des Trägerelements 15 eine Transportvorrichtung 7 und eine Gruppe von Saugelementen 9 bis 14 angeordnet ist, kann auch durch weitere Transportvorrichtungen und Gruppen von Saugelementen erweitert werden. Insbesondere kann beispielsweise ein Drehbalken 17 vorgesehen sein, bei dem jeweils eine Gruppe von Saugelementen und eine Transportvorrichtung gleichmäßig um die Längsachse 29 des Drehbalkens 17 herum angeordnet sind. Dabei erfolgt nach dem Aufnehmen der scheibenförmigen Elemente durch die Saugelemente jeweils eine Drehung um 360° geteilt durch die Anzahl der Transportvorrichtungen und Gruppen von Saugelementen, so dass die nächste Gruppe von Saugelementen zur Aufnahme neuer scheibenförmiger Elemente korrekt über der Zuführungsvorrichtung 8 orientiert ist.

Um, wie es bei dem Ausführungsbeispiel der Fig. 1 gezeigt ist, die jeweils ersten scheibenförmigen Elemente 1.1 bis 6.1 zeitrichtig bei Erreichen einer Position unterhalb der Saugelemente 9 bis 14 von den Förderelementen 1 bis 6 abheben zu können, werden die Hubvorrichtungen 32 der Saugelemente 9 bis 14 vorzugsweise individuell angesteuert.

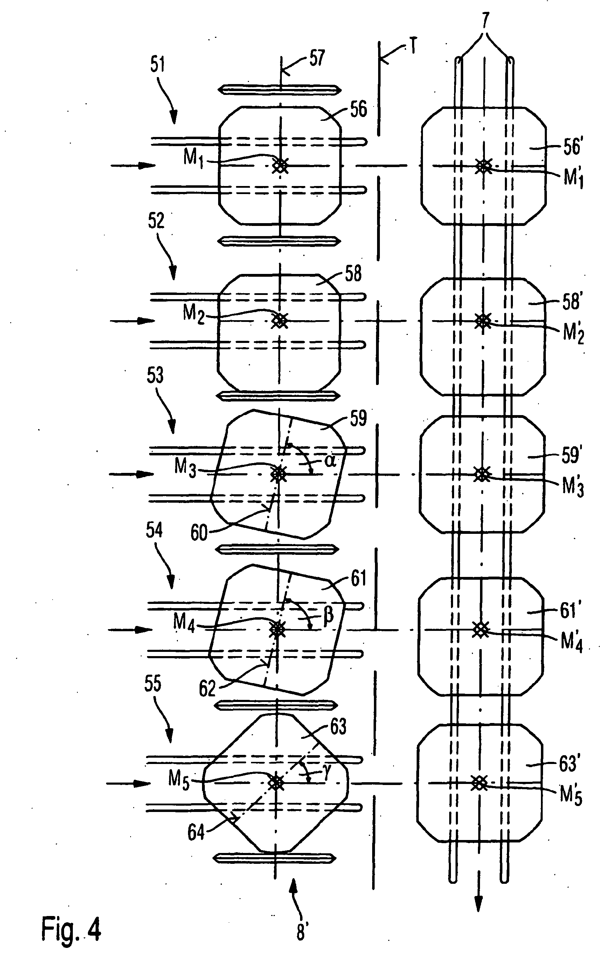

In der Fig. 4 ist es stark vereinfacht dargestellt, wie die scheibenförmigen Elemente durch die Saugelemente 9 bis 14 ausgerichtet werden können. Die Saugelemente 9 bis 14 sind hierzu nicht nur bezüglich ihres Abstands von dem Trägerbalken veränderbar, sondern können auch um ihre Mittelachse gedreht werden.

Die links einer Trennlinie T dargestellten Positionen zeigen beispielhaft mögliche Stellungen von insgesamt fünf scheibenförmigen Elementen 56, 58, 59, 61 und 63. Die scheibenförmigen Elemente werden durch die Zuführungsvorrichtung 8 in Pfeilrichtung zugeführt und können auf den Förderelementen 51 bis 55 sowohl gedreht als auch außermittig angeordnet sein. Eine Verschiebung der scheibenförmigen Elemente in Zuführrichtung relativ zueinander wird hierbei nicht betrachtet, da ein solches zeitversetztes Eintreffen der scheibenförmigen Elemente im Übernahmebereich durch die individuelle zeitliche Steuerung der Saugelemente einer Gruppe ausgeglichen wird.

Die Position der einzelnen scheibenförmigen Elemente 56, 58, 59, 61 und 63 wird beispielsweise durch ein nicht dargestelltes Bildverarbeitungssystem erkannt. Das Bildverarbeitungssystem kann entweder gleichzeitig zur Erfassung beschädigter Wafer dienen oder aber ein zusätzliches System sein.

Auf dem in der Fig. 4 ganz oben gezeigten Förderelement 51 wird ein scheibenförmiges Element 56 zugeführt, das hinsichtlich seiner Position ideal ausgerichtet ist. Dies betrifft sowohl eine seitliche Verschiebung als auch eine Drehung um den Mittelpunkt des Elements 56. Eine Korrektur ist nicht erforderlich. Das Bildverarbeitungssystem stellt einen Drehwinkel von 0° fest und das zugeordnete (nicht dargestellte) Saugelement nimmt das Element zu dem Zeitpunkt auf, in dem der Mittelpunkt des Elements mit einem Greifpunkt M₁ des zugeordneten Saugelements zusammenfällt. Der Greifpunkt M₁ entspricht bei rotationssymmetrischen Saugelementen der Längachse des Saugelements mit der Transportebene der Transportvorrichtung 7. Das Saugelement wird nur hinsichtlich seiner Höhe über der Zuführungsvorrichtung 8 und dem Erzeugen der Saugkraft angesteuert.

Auf dem zweiten Förderelement 52 der Fig. 4 liegt ein scheibenförmiges weiteres scheibenförmiges Element 58 bezüglich der Förderrichtung des Förderelements 52 seitlich verschoben. Da eine Drehung des Elements 58 nicht erforderlich ist, erfolgt ebenfalls eine Ansteuerung des zugeordneten Saugelements lediglich bezüglich der Erzeugung der Saugkraft und des Anhebens des Elements 58.

Das Anheben des Elements 58 erfolgt in dem Moment, in dem der Greifpunkt M₂ mit einer sich quer zur Zuführrichtung erstreckenden Mittellinie des scheibenförmigen Elements 58 zusammenfällt.

Auf dem dritten Förderelement 53 der Zuführungsvorrichtung 8' ist es gezeigt, dass das dort zugeführte scheibenförmige Element 59 um seinen Mittelpunkt gedreht ist. Durch das Bildverarbeitungssystem wird ein Drehwinkel α zwischen einer Mittellinie 60 des Elements quer zur Zuführrichtung ermittelt, der bei korrekter Lage des scheibenförmigen Elements 59 90° betragen müsste. Die Abweichung des Winkels α dient als Basis zur Berechnung einer Winkelkorrektur. Entsprechend dieser Winkelkorrektur wird das anhebende Saugelement angesteuert, so dass das durch das Saugelement angehobene Element wieder in eine korrekte Winkellage gebracht wird. Der Zeitpunkt in dem das scheibenförmige Element 59 angehoben wird, wird durch das Zusammenfallen der Mittellinie 60 mit dem Greifpunkt M₃ des zugeordneten Saugelements bestimmt. Die Greifpunkte M₁ bis M₅ sämtlicher Saugelemente einer Gruppe liegen dabei vorzugsweise auf einer theoretischen Erkennungslinie 57.

Bei dem auf dem vierten Förderelement 54 zugeführten Element 61 wird durch die Bildverarbeitung einerseits ein Winkelfehler β und andererseits eine seitliche Verschiebung in Richtung auf das fünfte Förderelement 55 zu erkannt. Wie schon bei dem vorangegangenen Element 59 wird jedoch nur die Drehung des Elements 61 korrigiert. Dazu wird erneut das zugeordnete Saugelement auf Basis des ermittelten Winkelfehlers gedreht. Das letzte scheibenförmige Element 63 zeigt wiederum einen reinen Winkelfehler, der hier allerdings genau 45° beträgt.

Bei einem seitlichen Versatz, wie er durch die Elemente 58 und 61 gezeigt wird, werden die scheibenförmigen Elemente quer zur Zuführrichtung außermittig durch die Saugelemente gehalten. Durch die zeitliche Ansteuerung der Saugelemente in dem Moment, da die Mittellinien 60, 62 bzw. 64 mit den Greifpunkten M_{3,4,5} zusammenfallen wird gewährleistet, dass die Elemente 59, 61 und 63 nach dem Ablegen auf der Transportvorrichtung 7 quer zu der Transportrichtung der Transportvorrichtung 7 mittig positioniert sind. Die Lage der umgesetzten Elemente 56', 58', 59', 61' und 63' nach dem Ablegen auf der Transportvorrichtung 7 und der Drehung des Drehbalkens 17 ist in der Fig. 4 rechts der Trennlinie T dargestellt. Die nicht durchgeführte Korrektur eines seitlichen Versatzes auf den Förderelementen 51 bis 55 der Zuführungsvorrichtung 8' führt dagegen zu einem ungleichmäßigen Elementabstand auf der Transportvorrichtung 7 des Drehbalkens 17. Dies spielt jedoch insbesondere bei einem getakteten Abtransport der Elemente durch die Transportvorrichtung keine Rolle bzw. ist mit geringem Aufwand korrigierbar.

Bei den vorstehenden Ausführungen wurden die scheibenförmigen Elemente grundsätzlich über die Zuführungsvorrichtung parallel in den Übernahmebereich gebracht. Dort wurden die Elemente durch die Saugelemente abgehoben und nach einer Drehung des Drehbalkens mit Hilfe der Transportvorrichtung zu der weiterführenden Transporteinrichtung abtransportiert. Es ist jedoch ebenfalls denkbar, dass sich der Ablauf umkehrt. Die scheibenförmigen Elemente werden dann z.B. über einen einzelnen Schnurtrieb oder aus Kassetten als erster Fördervorrichtung seriell der Transportvorrichtung zugeführt, auf der sie aufgrund der Schwerkraft liegen. Die Elemente werden dann durch die Saugelemente gegen den Schnurtrieb gezogen und der Drehbalken wird gedreht. Danach werden die scheibenförmigen Elemente durch die Saugelemente auf einer zweiten Transportvorrichtung abgelegt. Die zweite Transportvorrichtung kann dann einen Carrier oder eine Mehrzahl von Förderelementen umfassen. Auf eine erneute Darstellung sämtlicher Einzelheiten wird verzichtet, da sich dieses aus der vorbeschriebenen Durchführung des Verfahrens durch dessen Umkehrung ergibt.

## Patentansprüche

1. Vorrichtung zum Umsetzen scheibenförmiger Elemente von einer ersten Fördervorrichtung (8; 16, 34) auf eine zweite Fördervorrichtung (16, 34; 8) mit einem um eine Längsachse (29) drehbaren Trägerelement (15) an dem zumindest ein Saugelement (9 bis 14) angeordnet ist, **dadurch gekennzeichnet, dass** an dem Trägerelement (15) zumindest eine Transportvorrichtung (7) angeordnet ist, wobei die Orientierung der zumindest einen Transportvorrichtung (7) und des zumindest einen Saugelements (9 bis 14) bezüglich des Trägerelements (15) identisch ist und ein Abstand (d₁) zwischen einer Anlagefläche (31) des Saugelements (9 bis 14) und einer Auflageebene (39) der Transportvorrichtung (7) veränderbar ist.

2. Vorrichtung nach Anspruch 1,
**dadurch gekennzeichnet,**
**dass** der Abstand (d₁) einer Anlagefläche (31) des zumindest einen Saugelements (9 bis 14) relativ zu dem Trägerelement (15) veränderbar ist.

3. Vorrichtung nach Anspruch 1 oder 2,
**dadurch gekennzeichnet,**
**dass** der Abstand (d₂) einer Auflageebene (39) der zumindest einen Transportvorrichtung (7) relativ zu dem Trägerelement (15) veränderbar ist.

4. Vorrichtung nach einem der Ansprüche 1 bis 3,
**dadurch gekennzeichnet,**
**dass** mehrere Saugelemente (9 bis 14) einer Gruppe von Saugelementen (9 bis 14) an dem Trägerelement (15) angeordnet sind, wobei die Gruppe von Saugelementen (9 bis 14) eine identische Orientierung wie die zumindest eine Transportvorrichtung (7) aufweist.

5. Vorrichtung nach einem der Ansprüche 1 bis 4,
**dadurch gekennzeichnet,**
**dass** mehrere Gruppen von Saugelementen (9 bis 14) und mehrere Transportvorrichtungen (7) an dem Trägerelement (15) angeordnet sind, wobei jeweils eine Gruppe von Saugelementen (9 bis 14) und eine Transportvorrichtung (7) eine identische Orientierung aufweisen.

6. Vorrichtung nach Anspruch 4 oder 5,
**dadurch gekennzeichnet,**
**dass** die Saugelemente (9 bis 14) einer Gruppe einzeln ansteuerbar sind.

7. Vorrichtung nach einem der Ansprüche 1 bis 6,
**dadurch gekennzeichnet,**
**dass** die zumindest eine Transportvorrichtung (7) einen Schnurtrieb umfasst und das zumindest eine Saugelement (9 bis 14) so angeordnet ist, dass das zumindest eine Saugelement (9 bis 14) zwischen den zumindest zwei Schnüren des Schnurtriebs hindurchtreten kann.

8. Vorrichtung nach einem der Ansprüche 1 bis 7,
**dadurch gekennzeichnet,**
**dass** die Förderrichtung der ersten Fördervorrichtung (8) und die Transportrichtung der zumindest einen Transportvorrichtung (7) im Falle einer parallelen Zuführung von Elementen über die erste Fördervorrichtung (8) bzw. die Förderrichtung der zweien Fördervorrichtung und die Transportrichtung der zumindest einen Transportvorrichtung (7) im Falle eines parallelen Abtransports mehrerer scheibenförmiger Elemente näherungsweise senkrecht aufeinander stehen.

9. Vorrichtung nach einem der Ansprüche 1 bis 8,
**dadurch gekennzeichnet,**
**dass** das Trägerelement (15) zumindest in einer Richtung endlos drehbar ist.

10. Vorrichtung nach einem der Ansprüche 1 bis 9,
**dadurch gekennzeichnet,**
**dass** das zumindest eine Saugelement (9 bis 14) drehbar an dem Trägerelement (15) angeordnet ist.

11. Verfahren zum Umsetzen scheibenförmiger Elemente von einer ersten Fördervorrichtung (8) auf eine zweite Fördervorrichtung (16, 34) mit folgenden Verfahrensschritten:
- Zuführen von zumindest einem scheibenförmigen Element durch die erste Fördervorrichtung (8)
- Abheben des zumindest einen scheibenförmigen Elements von der ersten Fördervorrichtung (8) durch zumindest ein Saugelement (9 bis 14) entgegen der Schwerkraft, **dadurch gekennzeichnet, dass** es die folgenden Schritten aufweist:
- Drehen eines Tragerelements (15), an dem das zumindest eine Saugelement (9 bis 14) und eine Transportvorrichtung (7) angeordnet ist,
- Ablegen des zumindest einen scheibenförmigen Elements auf der Transportvorrichtung (7) durch Verringerung eines relativen Abstands (d₁) zwischen einer Anlagefläche (31) des zumindest einen Saugelements (9 bis 14) und der Transportvorrichtung (7) und
- Abtransport des zumindest einen scheibenförmigen . Elements durch die Transportvorrichtung (7) zu einer zweiten Fördervorrichtung (16, 34) hin.

12. Verfahren nach Anspruch 11,
**dadurch gekennzeichnet,**
**dass** zum Ablegen der scheibenförmigen Elemente auf der Transportvorrichtung (7) der Abstand (d₂) der Auflageebene (39) von dem Trägerelement (15) vergrößert wird.

13. Verfahren nach einem der Ansprüche 11 oder 12,
**dadurch gekennzeichnet,**
**dass** mehrere scheibenförmige Elemente in Bezug auf ihre Position zu einer Mehrzahl von Saugelementen (9 bis 14) ausgerichtet werden und dass die ausgerichteten scheibenförmigen Elemente gleichzeitig durch mehrere Saugelemente (9 bis 14) von der Fördervorrichtung (8) abgehoben werden.

14. Verfahren nach einem der Ansprüche 11 bis 13,
**dadurch gekennzeichnet,**
**dass** vor der Drehung des Trägerelements (15) durch mehrere Saugelemente (9 bis 14) jeweils ein scheibenförmiges Element angehoben wird, wobei die mehreren Saugelemente (9 bis 14) zum Abheben der scheibenförmigen Elemente auf das Eintreffen der scheibenförmigen Elemente zeitlich individuell angesteuert werden.

15. Verfahren zum Umsetzen scheibenförmiger Elemente von einer ersten Fördervorrichtung (16, 34) auf eine zweite Fördervorrichtung (8) mit folgenden Verfahrensschritten:
- Zuführen von zumindest einem scheibenförmigen Element durch die erste Fördervorrichtung (16, 34)
- Serieller Transport durch eine Transportvorrichtung (7)
- Halten des zumindest einen scheibenförmigen Elements in Anlage an der Transportvorrichtung (7), **dadurch gekennzeichnet, dass** es die folgenden Schritten aufweist:
- Drehen eines Trägerelements (15), an dem das zumindest eine Saugelement (9 bis 14) und eine Transportvorrichtung (7) angeordnet ist,
- Ablegen des zumindest einen scheibenförmigen Elements auf der zweiten Fördervorrichtung (8) durch zumindest ein Saugelement (9 bis 14) durch Vergrößern eines relativen Abstands (d1) zwischen einer Anlagefläche (31) des zumindest einen Saugelements (9 bis 14) und der Transportvorrichtung (7);
- Abtransport des zumindest einen scheibenförmigen Elements durch eine zweite Fördervorrichtung (8).

16. Verfahren nach einem der Ansprüche 11 bis 15,
**dadurch gekennzeichnet,**
**dass** zum Abheben des zumindest einen scheibenförmigen Elements und zum Verringern des Abstands (d₁) der Auflagefläche (31) von dem Trägerelement (15) das zumindest eine Saugelement (9 bis 14) in Richtung auf des Trägerelement (15) hin bzw. zum Vergrößern des Abstands (d1) und zum Ablegen des zumindest einen scheibenförmigen Elements auf der zweiten Fördervorrichtung (8) das zumindest eine Saugelement (9 bis 14) von dem Trägerelement (15) weg bewegt wird.

17. Verfahren nach einem der Ansprüche 11 bis 16,
**dadurch gekennzeichnet,**
**dass** die scheibenförmigen Elemente nach dem Anheben bzw. vor dem Ablegen bezüglich ihrer Winkellage zu einer Transportrichtung durch Drehung der Saugelemente (9 bis 14) einzeln ausgerichtet werden.

## Claims

1. A device for transferring disc-shaped elements from a first conveyor device (8; 16, 34) to a second conveyor device (16, 34; 8) having a carrier element (15) which is rotatable about a longitudinal axis (29) and on which at least one suction element (9 to 14) is arranged, **characterised in that** at least one transport device (7) is arranged on the carrier element (15), wherein the orientation of the at least one transport device (7) and the at least one suction element (9 to 14) with respect to the carrier element (15) is identical and a spacing (d₁) between a bearing surface (31) of the suction element (9 to 14) and a supporting plane (39) of the transport device (7) may be varied.

2. A device according to Claim 1,
**characterised in that**
the spacing (d₁) of a bearing surface (31) of the at least one suction element (9 to 14) relative to the carrier element (15) may be varied.

3. A device according to Claim 1 or 2,
**characterised in that**
the spacing (d₂) of a supporting plane (39) of the at least one transport device (7) relative to the carrier element (15) may be varied.

4. A device according to one of Claims 1 to 3,
**characterised in that**
a plurality of suction elements (9 to 14) of a group of suction elements (9 to 14) are arranged on the carrier element (15), the group of suction elements (9 to 14) having an identical orientation to the at least one transport device (7).

5. A device according to one of Claims 1 to 4,
**characterised in that**
a plurality of groups of suction elements (9 to 14) and a plurality of transport devices (7) are arranged on the carrier element (15), wherein, in each case, a group of suction elements (9 to 14) and a transport device (7) have an identical orientation.

6. A device according to Claim 4 or 5,
**characterised in that**
the suction elements (9 to 14) of a group may be driven individually.

7. A device according to one of Claims 1 to 6,
**characterised in that**
the at least one transport device (7) comprises a string gear and the at least one suction element (9 to 14) is arranged so that the at least one suction element (9 to 14) can pass through between the at least two strings of the string gear.

8. A device according to one of Claims 1 to 7,
**characterised in that**
the conveying direction of the first conveyor device (8) and the transport direction of the at least one transport device (7) in the case of a parallel supply of elements by way of the first conveyor device (8), and the conveying direction of the second conveyor device and the transport direction of the at least one transport device (7) in the case of a parallel transportation of a plurality of disc-shaped elements are approximately perpendicular to one another.

9. A device according to one of Claims 1 to 8,
**characterised in that**
the carrier element (15) is continuously rotatable at least in one direction.

10. A device according to one of Claims 1 to 9,
**characterised in that**
the at least one suction element (9 to 14) is rotatably arranged on the carrier element (15).

11. A process for transferring disc-shaped elements from a first conveyor device (8) to a second conveyor device (16, 34) having the process steps below:
- supplying at least one disc-shaped element by means of the first conveyor device (8),
- removing the at least one disc-shaped element from the first conveyor device (8) by means of at least one suction element (9 to 14) in opposition to the gravitational force, **characterised in that** it has the steps below:
- rotating a carrier element (15), on which the at least one suction element (9 to 14) and a transport device (7) is arranged,
- depositing the at least one disc-shaped element on the transport device (7) by reducing a relative spacing (d₁) between a bearing surface (31) of the at least one suction element (9 to 14) and the transport device (7), and
- transporting the at least one disc-shaped element to a second conveyor device (16, 34) by means of the transport device (7).

12. A process according to Claim 11,
**characterised in that**,
to deposit the disc-shaped elements on the transport device (7), the spacing (d₂) between the supporting plane (39) and the carrier element (15) is increased.

13. A process according to one of Claims 11 and 12,
**characterised in that**
a plurality of disc-shaped elements are aligned in terms of their position with a plurality of suction elements (9 to 14) and **in that** the aligned disc-shaped elements are simultaneously removed from the conveyor device (8) by a plurality of suction elements (9 to 14).

14. A process according to one of Claims 11 to 13,
**characterised in that**,
prior to the rotation of the carrier element (15), a disc-shaped element is removed in each case by a plurality of suction elements (9 to 14), the plurality of suction elements (9 to 14) being driven individually in time as they arrive at the disc-shaped elements for the purpose of removing the disc-shaped elements.

15. A process for transferring disc-shaped elements from a first conveyor device (16, 34) to a second conveyor device (8) having the process steps below:
- supplying at least one disc-shaped element by means of the first conveyor device (16, 34),
- serial transportation by means of a transport device (7),
- holding the at least one disc-shaped element in contact with the transport device (7), **characterised in that** it has the steps below:
- rotating a carrier element (15), on which the at least one suction element (9 to 14) and a transport device (7) is arranged,
- depositing the at least one disc-shaped element on the second conveyor device (8) by means of at least one suction element (9 to 14) by increasing a relative spacing (d₁) between a bearing surface (31) of the at least one suction element (9 to 14) and the transport device (7);
- transporting the at least one disc-shaped element by means of a second conveyor device (8).

16. A process according to one of Claims 11 to 15,
**characterised in that**,
to remove the at least one disc-shaped element and to reduce the spacing (d₁) between the bearing surface (31) and the carrier element (15), the at least one suction element (9 to 14) is moved in the direction of the carrier element (15) and, to increase the spacing (d₁) and to deposit the at least one disc-shaped element on the second conveyor device (8), the at least one suction element (9 to 14) is moved away from the carrier element (15).

17. A process according to one of Claims 11 to 16,
**characterised in that**,
after their removal and prior to being deposited, the disc-shaped elements are aligned individually in terms of their angular position with respect to a transport device by rotating the suction elements (9 to 14).

## Revendications

1. Dispositif de déplacement d'éléments en forme de disque d'un premier dispositif de convoyage (8; 16, 34) à un deuxième dispositif de convoyage (16, 34; 8) avec un élément de support (15) apte à tourner autour d'un axe longitudinal (29) auquel est disposé au moins un élément d'aspiration (9 à 14), **caractérisé en ce qu'**il est disposé à l'élément de support (15) au moins un dispositif de transport (7), où l'orientation du au moins un dispositif de transport (7) et du au moins un élément d'aspiration (9 à 14) relativement à l'élément de support (15) est identique, et un écart (d₁) entre une face d'application (31) de l'élément d'aspiration (9 à 14) et un plan de support (39) du dispositif de transport (7) est modifiable.

2. Dispositif selon la revendication 1, **caractérisé en ce que** l'écart (d₁) d'une face d'application (31) du au moins un élément d'aspiration (9 à 14) relativement à l'élément de support (15) est modifiable.

3. Dispositif selon la revendication 1 ou 2, **caractérisé en ce que** l'écart (d₂) d'un plan de support (39) du au moins un dispositif de transport (7) relativement à l'élément de support (15) est modifiable.

4. Dispositif selon l'une des revendications 1 à 3, **caractérisé en ce que** plusieurs éléments d'aspiration (9 à 14) d'un groupe d'éléments d'aspiration (9 à 14) sont disposés à l'élément de support (15), où le groupe d'éléments de support (9 à 14) présente une orientation identique à celle du au moins un dispositif de transport (7).

5. Dispositif selon l'une des revendications 1 à 4, **caractérisé en ce que** plusieurs groupes d'éléments d'aspiration (9 à 14) et plusieurs dispositifs de transport (7) sont disposés à l'élément de support (15), où à chaque fois un groupe d'éléments d'aspiration (9 à 14) et un dispositif de transport (7) présentent une orientation identique.

6. Dispositif selon la revendication 4 ou 5, **caractérisé en ce que** les éléments d'aspiration (9 à 14) d'un groupe peuvent être commandés individuellement.

7. Dispositif selon l'une des revendications 1 à 6, **caractérisé en ce que** le au moins un dispositif de transport (7) comprend une commande à cordes, et **en ce qu'**au moins un élément d'aspiration précité (9 à 14) est disposé de telle sorte que le au moins un élément d'aspiration (9 à 14) peut passer entre au moins deux cordes de la commande à cordes.

8. Dispositif selon l'une des revendications 1 à 7, **caractérisé en ce que** la direction de convoyage du premier dispositif de convoyage (8) et la direction de transport du au moins un dispositif de transport (7), dans le cas d'une amenée parallèle d'éléments par le premier dispositif de convoyage (8) respectivement la direction de convoyage du deuxième dispositif de convoyage et la direction de transport du au moins un dispositif de transport (7), dans le cas d'une évacuation parallèle de plusieurs éléments en forme de disque, sont approximativement perpendiculaires l'une à l'autre.

9. Dispositif selon l'une des revendications 1 à 8, **caractérisé en ce que** l'élément de support (15) peut tourner sans fin dans au moins une direction.

10. Dispositif selon l'une des revendications 1 à 9, **caractérisé en ce qu'**au moins un élément d'aspiration précité (9 à 14) est disposé d'une manière tournante à l'élément de support (15).

11. Procédé de déplacement d'éléments en forme de disque d'un premier dispositif de convoyage (8) à un deuxième dispositif de convoyage (16, 34) comprenant les étapes de procédé suivantes:
- amenée d'au moins un élément en forme de disque par le premier dispositif de convoyage (8);
- relever le au moins un élément en forme de disque du premier dispositif de convoyage (8) par au moins un élément d'aspiration (9 à 14) contre la gravité, **caractérisé en ce qu'**il présente les étapes suivantes:
- la rotation d'un élément de support (15) auquel est disposé le au moins un élément d'aspiration (9 à 14) et un dispositif de transport (7);
- dépôt du au moins un élément en forme de disque sur le dispositif de transport (7) en réduisant un écart relatif (d₁) entre une face d'application (31) du au moins un élément d'aspiration (9 à 14) et du dispositif de transport (7) et
- évacuation du au moins un élément en forme de disque par le dispositif de transport (7) vers un deuxième dispositif de convoyage (16, 34).

12. Procédé selon la revendication 11, **caractérisé en ce que** pour le dépôt des éléments en forme de disque sur le dispositif de transport (7), l'écart (d₂) du plan de support (39) de l'élément de support (15) est agrandi.

13. Procédé selon l'une des revendications 11 ou 12, **caractérisé en ce que** plusieurs éléments en forme de disque, en ce qui concerne leur position, sont orientés vers une pluralité d'éléments d'aspiration (9 à 14), et **en ce que** les éléments en forme de disque orientés sont relevés en même temps par plusieurs éléments d'aspiration (9 à 14) du dispositif de convoyage (8).

14. Procédé selon l'une des revendications 11 à 13, **caractérisé en ce qu'**avant la rotation de l'élément de support (15), par plusieurs éléments d'aspiration (9 à 14) à chaque fois un élément en forme de disque est relevé, où plusieurs éléments d'aspiration précités (9 à 14), pour le relevage des éléments en forme de disque, sont commandés individuellement dans le temps en ce qui concerne l'arrivée des éléments en forme de disque.

15. Procédé de déplacement d'éléments en forme de disque d'un premier dispositif de convoyage (16, 34) à un deuxième dispositif de convoyage (8), avec les étapes de procédé suivantes:
- amenée d'au moins un élément en forme de disque par le premier dispositif de convoyage (16, 34);
- transport sériel par un dispositif de transport (7);
- retenue du au moins un élément en forme de disque en application au dispositif de transport (7),
**caractérisé en ce qu'**il présente les étapes suivantes:
- rotation d'un élément de support (15) auquel est disposé le au moins un élément d'aspiration (9 à 14) et un dispositif de transport (7),
- dépôt du au moins un élément en forme de disque sur le deuxième dispositif de convoyage (8) par au moins un élément d'aspiration (9 à 14) en agrandissant un écart relatif (d₁) entre une face d'application (31) du au moins un élément d'aspiration (9 à 14) et le dispositif de transport (7);
- évacuation du au moins un élément en forme de disque par un deuxième dispositif de convoyage (8).

16. Procédé selon l'une des revendications 11 à 15, **caractérisé en ce que**, pour le relevage du au moins un élément en forme de disque et pour la réduction de l'écart (d₁) de la face d'application (31) de l'élément de support (15), le au moins un élément d'aspiration (9 à 14) est déplacé dans la direction vers l'élément de support (15) respectivement pour l'agrandissement de l'écart (d₁) et pour le dépôt du au moins un élément en forme de disque sur le deuxième dispositif de convoyage (8), le au moins un élément d'aspiration (9 à 14) est déplacé au loin de l'élément de support (15).

17. Procédé selon l'une des revendications 11 à 16, **caractérisé en ce que** les éléments en forme de disque, après le relevage respectivement avant le dépôt, concernant leur position angulaire à une direction de transport, sont orientés individuellement par la rotation des éléments d'aspiration (9 à 14).
